# EUROPÄISCHE PATENTSCHRIFT

(11) **EP 2 896 330 B1**
(45) Veröffentlichungstag und Bekanntmachung des Hinweises auf die Patenterteilung: **26.12.2018**
(21) Anmeldenummer: 15150292.9
(22) Anmeldetag: 07.01.2015
(51) Int. Cl.: A47J 27/62

(54) **Adapter zum Befestigen einer Temperaturabfühlvorrichtung**
Adapter for attaching a temperature sensor
Adaptateur destiné à fixer un dispositif de détection de température

(30) Priorität: 20.01.2014 DE 102014200887
(43) Veröffentlichungstag der Anmeldung: 22.07.2015
(73) Patentinhaber: BSH Hausgeräte GmbH, 81739 München (DE)
(72) Erfinder: Has, Uwe, 84579 Unterneukirchen (DE); Schemmerer, Roman, 83349 Palling (DE); Vormann, Ingo, 83413 Fridolfing (DE)

(56) Entgegenhaltungen:
- WO-A1-2013/150397
- US-A- 2 977 082
- US-A- 3 159 372
- US-A- 3 245 165

## Beschreibung

Die Erfindung betrifft einen Adapter zum Befestigen einer Temperaturabfühlvorrichtung an einem Gargeschirr. Die Erfindung betrifft ferner ein Gargeschirr, wobei das Gargeschirr an seiner Außenseite, insbesondere Seitenwand, mindestens einen Adapter aufweist.

In der DE 1 739 099 U wird eine Vorrichtung zur Überwachung der Temperatur bei Elektrowärmegeräten beschrieben, die beim Erreichen einer bestimmten Temperatur des Wärmegeräts bzw. des zu erwärmenden Gutes den Heizstrom ganz oder teilweise abschalten und gegebenenfalls bei sinkender Temperatur wieder zuschalten kann, wobei im letzteren Falle die Temperatur etwa auf dem gleichen vorher einstellbaren Wert gehalten wird. In der DE 1 739 099 U wird es auch beschrieben, eine thermobimetallbetätigte Vorrichtung mit einem Magneten zu versehen, so dass sie beim Ansetzen an der Wandung eines Kochtopfes magnetisch gehalten wird. In der DE 1 739 099 U wird ferner beschrieben, dass ein Überwachungsglied, z.B. ein Bimetallregler, unter Vermittlung eines oder mehrerer Saugnäpfe aus elastischem Werkstoff, z.B. Natur- oder Silikon-Kautschuk, an der zu überwachenden Stelle festlegbar ist.

DE 41 29 196 A1 offenbart eine Vorrichtung zur Regelung der Heizleistung einer Kochstelle, insbesondere für einen Elektroherd, mit Hilfe eines an der Außenwand des Kochgefäßes anliegenden Wandberührungssensors, mit dem der Ist-Wert der Temperatur des Gefäßinhalts näherungsweise festgestellt wird, Der Wandberührungssensor soll zur bequemen Benutzung in Verbindung mit einer ebenflächigen Heizfläche ausgebildet werden. Dies wird dadurch erreicht, dass der Wandberührungssensor in Verbindung mit einem auf der Herdplatte bzw. auf dem Kochfeld befestigten Anlagestück gehaltert ist.

EP 0 779 051 A1 offenbart einen Topf für eine sensorgesteuerte Garungseinheit, die aus Gargerät, Sensorik und Kochfeld besteht, wobei ein der sensorgesteuerten Garungseinheit zugeordneter Infrarotsensor kochstellenbezogen leicht erhöht oberhalb des Kochfeldes angeordnet und in einer konstruktiven Funktionseinheit integriert ist, so dass in der sensorgesteuerten Garungseinheit Kochfeld, Gargerät und Sensorik systemhaft miteinander verbunden, aufeinander angepasst und optimierbar sind, wobei eine Systemertüchtigung zum Infrarotsensor-Garen für Normaltöpfe durch eine Beschichtung mit Folie, Lack oder anderen Mitteln herbeiführbar ist, wobei diese Beschichtung eine restlos lösbare ist.

WO 2013/150397 A1 offenbart einen Adapter zum Befestigen einer Temperaturabfühlvorrichtung an einem Gargeschirr in Kombination mit einer Temperaturabfühlvorrichtung.

Es ist die **Aufgabe** der vorliegenden Erfindung, die Nachteile des Standes der Technik zumindest teilweise zu überwinden und insbesondere eine verbesserte Möglichkeit zur Abfühlung einer Temperatur eines Gargeschirrs bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Kombination umfassend einen Adapter, welcher zum Befestigen einer Temperaturabfühlvorrichtung an einem Gargeschirr und eine Temperaturabfühlvorrichtung, nach dem Anspruch 1. Der Adapter weist einen rückseitigen, elastisch verformbaren Kontaktbereich auf, welcher zur Befestigung an dem Gargeschirr vorgesehen ist. Der Adapter weist ferner mindestens einen Befestigungsbereich zur Befestigung der Temperaturabfühlvorrichtung auf, welcher vorderseitig vorsteht. Der Adapter ist zudem dauermagnetisch oder magnetisch anziehbar.

Dieser Adapter ergibt den Vorteil einer einfach lösbaren Befestigung der Temperaturabfühlvorrichtung an dem Adapter und damit auch an dem Gargeschirr, und zwar unabhängig von der Art und Beschaffenheit des Gargeschirrs. So mag das Gargeschirr magnetisch anziehbar oder magnetisch nicht anziehbar sein.

Bei einem dauermagnetischen Adapter mag die Temperaturabfühlvorrichtung ebenfalls mindestens einen Dauermagneten aufweisen oder durch den dauermagnetischen Adapter magnetisch anziehbares Material, z.B. Eisen, aufweisen. Für den Fall, dass der Adapter "nur" durch einen Magneten magnetisch anziehbar ist, weist die Temperaturabfühlvorrichtung bevorzugt einen Dauermagneten auf.

Der Adapter ist insbesondere ein separat herstellbares und handhabbares Bauteil. Der Adapter kann separat beschafft werden und auch auf nicht speziell zu seiner Befestigung ausgebildetem oder vorgesehenem Gargeschirr ("Legacy-Gargeschirr") angebracht werden.

Der Adapter kann lösbar oder unlösbar mit dem Gargeschirr verbunden werden. Der Adapter mag z.B. magnetisch und/oder mittels eines Haftvermittlers an dem Gargeschirr befestigt sein.

Die Temperaturabfühlvorrichtung ist zum direkten oder indirekten Abfühlen einer Temperatur des Gargeschirrs vorgesehen. Die Temperaturabfühlvorrichtung kann auch als "Kochsensor" bezeichnet werden.

Das Gargeschirr mag auch als Gargutbehälter bezeichnet werden. Das Gargeschirr mag insbesondere ein Kochgeschirr sein, z.B. ein Topf oder ein Pfanne.

Die Temperatur des Gargeschirrs ist insbesondere eine Temperatur an einer Außenseite des Gargeschirrs, insbesondere des Gargeschirrs als solchem und nicht eines Deckels.

Es ist eine Ausgestaltung, dass der Adapter mindestens einen dauermagnetischen oder magnetisch anziehbaren Körper aufweist. Dieser lässt sich (beispielsweise im Gegensatz zu kleinen Partikeln) individuell handhaben und stellt ein großes Volumen an dauermagnetischem oder magnetisch anziehbarem Material bereit. Insbesondere ist so ein starker, aber kompakter Dauermagnet bereitstellbar. Das dauermagnetische oder magnetisch anziehbare Material mag z.B. ein ferromagnetisches Material sein.

Es ist eine Ausgestaltung davon, dass mindestens ein dauermagnetischer oder magnetisch anziehbarer Körper in ein elastisches Grundmaterial eingebettet ist. Durch das elastische Grundmaterial kann eine Auflage des Bodenbereichs auch auf gekrümmten Flächen des Gargeschirrs sicher und mit einfachen Mitteln erreicht werden, z.B. durch eine Verklebung, z.B. mit doppelseitigem Klebeband, und zwar auch ohne eine Verformung des in der Regel steiferen Körpers. Es ist eine besonders vielgestaltige Formgebung möglich. Ferner wird auf einfache Weise eine einstückige Herstellung ermöglicht. Dazu mag der mindestens eine Körper z.B. vor einem Einfüllen gussfähigen Grundmaterials in eine Spritzgussform eingelegt werden. Der Adapter mag ganz oder teilweise aus einem solchen mit dem Körper versehenen Grundmaterial bestehen.

Es ist eine zusätzliche oder alternative Ausgestaltung, dass der Adapter in ein elastisches Grundmaterial eingebetteten, magnetisch anziehbaren Füllstoff aufweist. Der Füllstoff mag z.B. ferromagnetische Partikel aufweisen. Der Adapter mag ganz oder teilweise aus einem solchen mit dem Füllstoff versetzten Grundmaterial bestehen. Bei dieser Ausgestaltung braucht kein Bauvolumen für einen dauermagnetischen oder magnetisch anziehbaren Körper bereitgestellt zu werden. Auch hier ist eine besonders vielgestaltige Formgebung möglich. Ferner wird eine einstückige Herstellung in nur einem Arbeitsgang noch weiter erleichtert, da z.B. auf ein Einlegen von Körpern verzichtet werden kann.

Das Grundmaterial ist bevorzugt eine Vergussmasse, insbesondere eine spritzgussfähige Vergussmasse. Das Grundmaterial ist bevorzugt Kunststoff, z.B. Silikon oder Kautschuk.

Das Grundmaterial befindet sich insbesondere auch an der Kontaktfläche.

Es ist eine Weiterbildung, dass der mindestens eine Befestigungsbereich als eine zumindest sektorweise ringförmige Seitenwand ausgebildet ist. Eine solche Seitenwand ermöglicht ein besonders einfaches Aufsetzen der Temperaturabfühlvorrichtung mit einfacher Ausrichtung. Die ringförmige Seitenwand mag insbesondere kreisringförmig sein, was eine beliebige Drehstellung der Temperaturabfühlvorrichtung ermöglicht. Die ringförmige Seitenwand mag aber auch eine eckige, z.B. quadratische, Verlaufsform aufweisen.

Es ist eine Weiterbildung, dass die zumindest sektorweise ringförmige Seitenwand eine geschlossen umlaufende Seitenwand ist, weil so ein seitliches Eindringen von Störstrahlung, z.B. von IR-Strahlung einer Kochstelle, sicher verhindert werden kann. Der Adapter und eine darauf aufgesetzte Temperaturabfühlvorrichtung können so - ggf. mit dem Gargeschirr - für eine störunanfällige Temperaturmessung und zum Schutz vor Staub, Dampf usw. einen geschlossenen Hohlraum bilden. In den Hohlraum kann z.B. ein IR-Sensor der Temperaturabfühlvorrichtung gerichtet sein, insbesondere darin hineinragen.

Es ist auch eine Weiterbildung, dass die Seitenwand aus dem Grundmaterial (mit oder ohne Füllstoff(e)) besteht.

Es ist noch eine Ausgestaltung, dass in die Seitenwand, insbesondere in eine umlaufende ringförmige Seitenwand, ein ringförmiger dauermagnetischer oder magnetisch anziehbarer Körper eingebettet ist. Dies ermöglicht aufgrund des großen Volumens des ringförmigen Körpers eine starke magnetische Verbindung des Adapters mit der Temperaturabfühlvorrichtung, ohne eine Messfläche einzuschränken. Zudem wird so eine elastische Verformbarkeit des Bodenbereichs auch bei einem praktisch starren ringförmigen Körper nicht behindert. Der ringförmige Körper mag z.B. aus Eisen bestehen oder Eisen aufweisen.

Es ist eine alternative und/oder zusätzliche Ausgestaltung, dass der Adapter vollständig aus dem Grundmaterial mit dem magnetisch anziehbaren Füllstoff besteht. Dadurch kann eine Herstellung erleichtert werden. Ggf. können auch noch weitere Füllstoffe in dem Grundmaterial verteilt sein, z.B. zur Änderung einer IR-Eigenschaft wie einer Wärmeleitfähigkeit und/oder eines IR-Abstrahlverhaltens.

Es ist ferner eine Ausgestaltung, dass die Seitenwand eine sich nach vorne verjüngende Außenseite aufweist. Dies erleichtert ein Aufstecken der Temperaturabfühlvorrichtung.

Es ist außerdem eine Ausgestaltung, dass die Seitenwand eine sich innen- und außenseitig nach vorne verjüngende Querschnittsform aufweist. Diese ermöglicht zusätzlich eine sehr gute Ausnutzung der Messfläche durch die Temperaturabfühlvorrichtung, und zwar auch dann, wenn die Seitenwand beim Aufsetzen der Temperaturabfühlvorrichtung nach Innen gedrückt werden sollte.

Es ist zudem erfindungsgemäss, dass der Kontaktbereich mittels einer Rückseite eines geschlossenen Bodenbereichs des Adapters gebildet wird und sich der mindestens eine Befestigungsbereich an den Bodenbereich anschließt. Eine Vorderseite des Bodenbereichs ist als eine Messfläche für die Temperaturabfühlvorrichtung vorgesehen. Der Adapter gemäß dieser Ausgestaltung dient nicht nur zur verbesserten, großflächigen mechanischen Befestigung der Temperaturabfühlvorrichtung an einem Kochgeschirr, sondern stellt mit dem Bodenbereich auch eine besser definierte Messfläche für eine berührungslos abfühlende Temperaturabfühlvorrichtung bereit. Ein Infrarot(IR)-Abstrahlverhalten der als Messfläche dienenden Vorderseite ist bekannt, so dass sich gleichmäßige IR-Messbedingungen für unterschiedliche Arten von Gargeschirr ergeben, welche Gargeschirre selbst ein unterschiedliches IR-Abstrahlverhalten aufweisen können, z.B. aufgrund eines unterschiedlichen Materials, einer unterschiedlichen Oberflächenbeschaffenheit, einer unterschiedlichen Farbe usw. Die Vorderseite ist nahe an dem Gargeschirr angeordnet, so dass es auf einer Temperatur liegt, welche der Temperatur des Gargeschirrs am Anbringungsort mit hoher Genauigkeit entspricht.

Der mindestens eine Befestigungsbereich steht von dem Bodenbereich ausgehend vorderseitig vor. Insbesondere mag mindestens ein Befestigungsbereich an einem seitlichen Rand des Bodenbereichs anschließen, insbesondere eine ringförmige bzw. umlaufende Seitenwand. Die als eine Messfläche vorgesehene Vorderseite bzw. der als Messfläche vorgesehene Bereich, ggf. auch Teilbereich, der Vorderseite des Bodenbereichs wird dann also insbesondere von dem mindestens einen Befestigungsbereich seitlich begrenzt. Dies ermöglicht eine besonders einfache Befestigung durch Aufsetzen und einen besonders zuverlässigen Betrieb der Temperaturabfühlvorrichtung. Der Bodenbereich mag zusammen mit der umlaufenden Seitenwand einen wannenförmigen oder schalenförmigen Körper bilden.

Es mag ausreichend sein, wenn die Rückseite des Bodenbereichs elastisch verformbar ist. Die Rückseite mag z.B. eine zur Anpassung an eine Krümmung ausreichend dicke Schicht aus Silikon und/oder Kautschuk aufweisen. Insbesondere mag der Bodenbereich als Ganzes elastisch verformbar sein, z.B. aus dem Grundmaterial bestehen.

Der Bodenbereich ist zur Verringerung eines thermischen Widerstands zwischen der Rückseite und der Vorderseite bevorzugt dünn, d.h. dass der Bodenbereich bevorzugt eine Ausdehnung aufweist, die merklich geringer ist als seine (ebene) Fläche quer dazu. Der Bodenbereich ist bevorzugt scheibenförmig, z.B. kreisscheibenförmig oder mit eckiger Außenkontur, ausgebildet.

Als Messfläche mag die gesamte Vorderseite oder nur ein Teil oder Teilbereich der Vorderseite des Bodenbereichs vorgesehen sein oder dienen.

Es ist eine Ausgestaltung, dass die Vorderseite des Bodenbereichs bzw. der als Messfläche dienende Bereich davon eine IR-Abstrahleigenschaft aufweist, welche geeigneter zur Temperaturmessung ist als die Rückseite. Dadurch wird eine verbesserte drahtlose Temperaturabfühlung ermöglicht. Insbesondere mag so die Rückseite auf eine großflächige Auflage auf dem Gargeschirr hin optimiert werden, während die Vorderseite auf eine für eine reproduzierbare Temperaturmessung verbesserte IR-Abstrahleigenschaft hin optimiert wird.

Beispielsweise mag die Vorderseite eine andere Farbe, insbesondere eine dunklere Farbe, aufweisen als die Rückseite. Die Vorderseite mag insbesondere eine schwarze Farbe aufweisen. Auch mag die Vorderseite IR-entspiegelt bzw. matt sein, um Spiegelungen des IR-Lichts zu vermeiden. Die Vorderseite mag z.B. aufgeraut oder stärker aufgeraut sein.

Es ist eine Weiterbildung, dass das Bodenstück zumindest im Bereich der Messfläche IR-undurchlässig ist. Dadurch wird ein Einfluss einer Oberflächenbeschaffenheit des Gargeschirrs auf die Temperaturmessung ausgeschlossen.

Es ist eine zur Herstellung einer IR-Undurchlässigkeit bevorzugte Ausgestaltung, dass die Messfläche oder die als die Messfläche dienende Vorderseite des Bodenbereichs mit einer insbesondere IR-undurchlässigen Schicht belegt ist. Die Schicht kann noch stärker auf eine Erreichung eines gewünschten IR-Abstrahlverhaltens angepasst sein als der restliche Bodenbereich. Dies verbessert eine Temperaturabfühlung. Die Schicht mag z.B. eine Farbschicht sein, die beispielsweise auf den Bodenbereich aufgesprüht oder aufgedruckt worden ist. Alternativ mag die Schicht eine eigenständig hergestellte Schicht sein, z.B. eine Folie, welche z.B. auf den Bodenbereich haftend aufgebracht worden ist. Die Schicht mag insbesondere Ruß aufweisen, da dieser eine einem Schwarzkörper sehr ähnliche Abstrahlcharakteristik aufweist.

Es ist noch eine zur Herstellung einer IR-Undurchlässigkeit bevorzugte Ausgestaltung, dass der Adapter aus einem elastischen, IR-undurchlässigen Material besteht, was eine Genauigkeit und Vergleichbarkeit einer Temperaturabfühlung verbessert. Dies kann beispielsweise durch eine Beimengung von IR-undurchlässigem Füllmaterial zu dem elastischen Grundmaterial geschehen, z.B. durch eine Beimengung von Rußpartikeln.

Es ist noch eine weitere zur Herstellung einer IR-Undurchlässigkeit bevorzugte Ausgestaltung, dass in den Bodenbereich zumindest in dem als Messfläche dienenden Bereich ein IR-undurchlässiger Körper eingebettet ist, z.B. ein dünnes Blech oder eine Folie, z.B. aus Metall oder aus Kunststoff. Dies mag besonders gut reproduzierbare IR-Abstrahleigenschaften ergeben.

Es ist eine alternative Ausgestaltung, dass der Adapter aus einem elastischen, IRdurchlässigen Grundmaterial besteht. Dies eröffnet die Möglichkeit, dass die Temperaturabfühlvorrichtung durch den Bodenbereich hindurch Blick auf das Gargeschirr erhält und so dessen Temperatur direkt messen kann. Eine Vorderseite des Bodenbereichs mag dabei zur Erhöhung der Messgenauigkeit insbesondere IR-entspiegelt sein. Der den Bodenbereich des Adapters betreffende Aspekt der Erfindung nutzt also insbesondere, dass der IR-Sensor der Temperaturabfühlvorrichtung eine Oberfläche des Gargeschirrs nicht direkt abfühlt, sondern ein Bereich des Adapters in das Blickfeld des IR-Sensors vor dem Gargeschirr eingebracht ist. Da eine IR-Abstrahleigenschaft des Bodenbereichs im Gegensatz zu dem Gargeschirr gut bekannt ist, lässt sich eine Genauigkeit der Temperaturabfühlung verbessern. Dies gilt insbesondere, falls der Bodenbereich das Gargeschirr kontaktiert und einen geringen Wärmeverlust zwischen Kontaktfläche und Messfläche aufweist. Diese Verbesserung der Genauigkeit der Temperaturabfühlung wird aufgrund der bekannten IR-Abstrahleigenschaft des Bodenbereichs bereits dann erreicht, wenn der Bodenbereich für IR-Strahlung im Empfindlichkeitsbereich des IR-Sensors zumindest teilweise spektral durchlässig ist. Die Genauigkeit der Temperaturabfühlung wird weiter verbessert, wenn der Bodenbereich für IR-Strahlung im Empfindlichkeitsbereich des IR-Sensors spektral undurchlässig ist. Die Genauigkeit der Temperaturabfühlung wird auch verbessert, wenn die Messfläche ein einem schwarzen Körper ähnliches Abstrahlverhalten zeigt.

Die Aufgabe wird auch gelöst durch ein Gargeschirr, welches an seiner Außenseite, insbesondere einer seitlichen Außenwand, mindestens eine Kombination wie oben beschrieben aufweist. Ein solches Gargeschirr weist die gleichen Vorteile auf wie der Adapter und kann analog ausgestaltet werden.

Es ist eine Ausgestaltung, dass der Adapter mit seinem Kontaktbereich (insbesondere einer Rückseite eines Bodenbereichs) an der Außenseite des Gargeschirrs angeklebt ist. So mag der Adapter an eine besonders vielfältige Menge von Gargeschirr angebracht werden, z.B. auch an solches Gargeschirr, welches keine magnetische Haftung zulässt. Der Adapter kann mit dem Gargeschirr unlösbar verbunden sein, z.B. mittels eines entsprechenden Klebstoffs. Der Adapter kann mit dem Gargeschirr aber auch lösbar verbunden sein, z.B. über ein ablösbares doppelseitiges Klebeband. Alternativ oder zusätzlich mag der Adapter mit seinem Kontaktbereich an der Außenseite des Gargeschirrs magnetisch haftend angebracht sein, was z.B. dessen einfache Befestigung und Ablösung ermöglicht.

Es ist noch eine Ausgestaltung, dass die Temperaturabfühlvorrichtung an dem mindestens einen Befestigungsbereich befestigt ist, insbesondere auf die Seitenwand des Adapters aufgesetzt ist. Die Temperaturabfühlvorrichtung weist mindestens einen in Richtung des Gargeschirrs gerichteten, berührungslos arbeitenden IR-Sensor auf. Der IR-Sensor mag insbesondere auf eine Vorderseite eines Bodenbereichs gerichtet sein. Der IR-Sensor mag z.B. einen einzelnen Thermopile oder Thermosäule aufweisen oder mag ein Feld aus mehreren Thermopiles ("Thermopile-Array") aufweisen.

Es ist noch eine Weiterbildung, dass die Temperaturabfühlvorrichtung mindestens eine Vorrichtung zum Feststellen mindestens eines vorbestimmten Temperaturschwellwerts an der Temperaturabfühlvorrichtung aufweist, welche Vorrichtung im Folgenden ohne Beschränkung der Allgemeinheit als "Thermoschalter" bezeichnet wird. Durch den mindestens einen Thermoschalter können Daten erzeugt werden, welche auf eine drohende oder bereits eingetretene Erhitzung der Temperaturabfühlvorrichtung selbst hinweisen. Dadurch kann die Energiezufuhr zu dem Gargeschirr so weit reduziert werden, insbesondere abgeschaltet werden, dass eine dauerhafte Schädigung der Temperaturabfühlvorrichtung verhindert werden kann. Dies bewirkt eine zusätzliche Sicherheit für die Temperaturabfühlvorrichtung und auch für einen durch die Temperaturabfühlvorrichtung beeinflussten Garvorgang. Während also der IR-Sensor dazu eingerichtet und angeordnet ist, die Temperatur des Gargeschirrs direkt oder indirekt zu messen, dient der Thermoschalter insbesondere dazu, ein Erreichen, Überschreiten und/oder Unterschreiten einer Temperatur in der Temperaturabfühlvorrichtung zu erkennen. Diese Temperatur in der Temperaturabfühlvorrichtung mag insbesondere für eine Temperatur an einer thermisch empfindlichen Komponente repräsentativ sein. Die thermisch empfindliche Komponente mag beispielsweise der IR-Sensor und/oder eine Elektronik sein.

Der Thermoschalter mag eine allgemeine Vorrichtung zum Bestimmen zumindest eines vorbestimmten Temperaturschwellwerts sein. Sie mag eine elektrisch oder eine nichtelektrisch arbeitende Vorrichtung sein. Sie mag eine Elektronik aufweisen oder zur Durchführung ihrer Funktion auf eine Elektronik verzichten. Der Thermoschalter ist grundsätzlich nicht auf eine Funktion eines Schalters mit zwei Zuständen, z.B. "offen" oder "geschlossen", beschränkt.

Die Temperaturabfühlvorrichtung mag zudem mindestens einen drahtlos arbeitenden Sender zur Aussendung von durch den IR-Sensor und - falls vorhanden - von durch den mindestens einen Thermoschalter erzeugten Daten aufweisen. Der Sender mag insbesondere ein Funksender sein. Dadurch wird vermieden, dass wie bei einer grundsätzlich auch einsetzbaren IR-Datenverbindung eine Sichtverbindung des Senders der Temperaturabfühlvorrichtung mit einem Empfänger bestehen muss. Der Sender mag z.B. nach dem Bluetooth-Standard arbeiten.

Es ist eine zur einfachen Bestimmung der Temperatur in der Temperaturabfühlvorrichtung bevorzugte Ausgestaltung, dass mindestens ein Thermoschalter eine Temperatur an einer Gehäusewand der Temperaturabfühlvorrichtung abfühlt. Er mag dazu insbesondere an der Gehäusewand angeordnet sein und insbesondere damit thermisch verbunden sein.

Es wird weiter offenbart ein System, aufweisend sowohl ein elektrisch betriebenes Haushaltsgargerät zum Betreiben mindestens eines Gargeschirrs als auch mindestens ein Gargeschirr, wobei das Gargeschirr über den Adapter mit einer mit einem Sender ausgestatteten Temperaturabfühlvorrichtung wie oben beschrieben ausgerüstet ist, das Haushaltsgargerät mindestens einen Empfänger zum Empfangen von Daten mindestens einer Temperaturabfühlvorrichtung aufweist und das Haushaltsgargerät eine Steuervorrichtung aufweist, mittels der auf der Grundlage von durch die Temperaturabfühlvorrichtung ausgesandten Daten eine Energiezufuhr zu dem zugehörigen Gargeschirr einstellbar ist.

Es ist eine Ausgestaltung, dass mittels der Steuervorrichtung auf der Grundlage von durch den IR-Sensor der Temperaturabfühlvorrichtung erzeugten Daten eine Solltemperatur des Gargeschirrs einstellbar ist. Dadurch wird eine automatische Gartemperaturregelung ermöglicht, beispielsweise im Rahmen eines zuvor ausgewählten Garprogramms.

Es ist noch eine Ausgestaltung, dass auf der Grundlage von durch mindestens einen Thermoschalter der Temperaturabfühlvorrichtung erzeugten Daten eine Reduzierung, insbesondere Abschaltung, der Energiezufuhr zu dem Gargeschirr auslösbar ist.

Das Haushaltsgargerät mag insbesondere ein Kochfeld mit mindestens einer Kochstelle aufweisen. Das Gargeschirr mag zum Erhitzen insbesondere auf einer Kochstelle abgestellt sein oder werden. Das Haushaltsgargerät mag beispielsweise ein eigenständiges Kochfeld oder ein Kombinationsgerät aus einem Kochfeld und einer anderen Gargerätefunktion sein, z.B. ein Herd als eine Ofen/Kochfeld-Kombination. Ein Empfänger, insbesondere Funkempfänger, des Haushaltsgargeräts mag z.B. in oder an dem Kochfeld angeordnet sein, mag aber auch ein externer Empfänger sein. Der externe Empfänger mag z.B. an einer Esse oder Dunstabzugshaube angeordnet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.
- Fig.1: zeigt in einer Ansicht von schräg oben ein Gargeschirr mit einer daran befestigten Temperaturabfühlvorrichtung;
- Fig.2: zeigt in einer Ansicht von schräg oben ein Gargeschirr mit einem daran angebrachten Adapter gemäß einem ersten Ausführungsbeispiel zur Befestigung der Temperaturabfühlvorrichtung aus Fig.1;
- Fig.3: zeigt als Querschnitt in Seitenansicht das in Fig.1 und 2 gezeigte System Gargeschirr mit der über den Adapter gemäß dem ersten Ausführungsbeispiel angebrachten Temperaturabfühlvorrichtung; und
- Fig.4: zeigt als Querschnitt in Seitenansicht ein System mit dem Gargeschirr, einem Adapter gemäß einem zweiten Ausführungsbeispiel und der daran angebrachten Temperaturabfühlvorrichtung aus Fig.1.

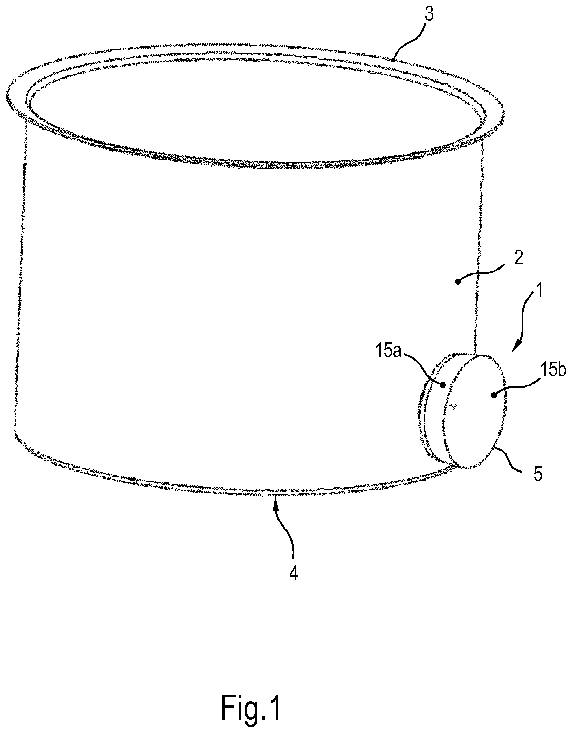

**Fig.1** zeigt eine Temperaturabfühlvorrichtung 1, welche magnetisch und also lösbar an einer seitlichen Außenseite 2 eines Gargeschirrs in Form eines Kochtopfs 3 befestigt ist.

Die Temperaturabfühlvorrichtung 1 ist in der Nähe eines Bodens 4 des Kochtopfs 3 befestigt, um eine Gartemperatur von in dem Kochtopf 3 befindlichem Gargut über die Außenseite 2 des Kochtopf 3 auch bei einem nur teilweise gefüllten Kochtopf 3 berührungslos zuverlässig bestimmen zu können. Die Temperaturabfühlvorrichtung 1 weist ein Gehäuse 5 mit einer scheibenähnlichen Grundform auf.

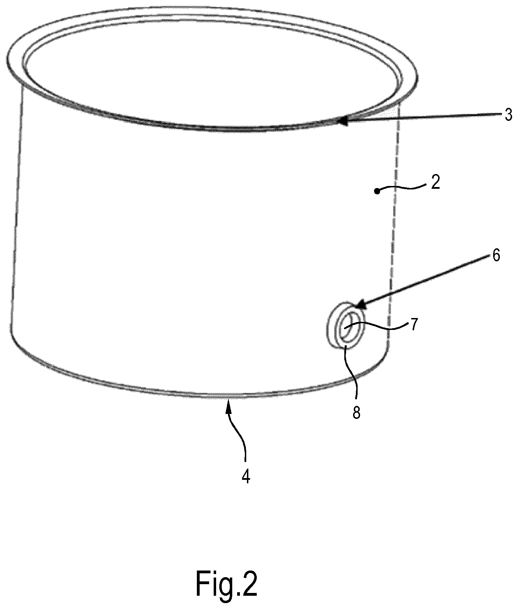

Die Temperaturabfühlvorrichtung 1 ist nicht direkt an dem Kochtopf 3 befestigt, sondern über einen in **Fig.2** gezeigten Adapter 6. Der Adapter 6 ist schalenförmig mit einem kreisscheibenförmigen Bodenbereich 7 und einer daran randseitig anschließenden ringförmigen Seitenwand 8 ausgebildet. Die Seitenwand 8 steht nach vorne (in Richtung der von dem Kochtopf 3 abgewandten Seite) vor.

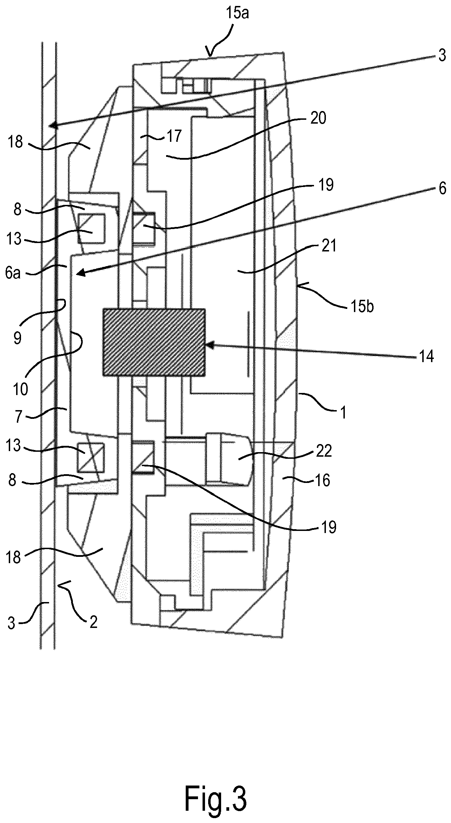

Wie in **Fig.3** gezeigt, ist der Adapter 6 über eine Rückseite 9 seines Bodenbereichs 7 mit der Außenseite 2 des Kochtopfs 3 lösbar oder unlösbar verbunden, z.B. daran angeklebt. Der Bodenbereich 7 ist dabei ausreichend elastisch, dass sich die Rückseite 9 vollflächig an die gekrümmte Außenseite 2 des Kochtopfs 3 anschmiegen und sie kontaktieren kann. Dadurch wird eine effektive Wärmeübertagung von dem Kochtopf 3 auf den Bodenbereich 7 erreicht. Die von der ringförmigen Seitenwand 8 umschlossene Vorderseite 10 des Bodenbereichs 7 dient zumindest teilweise als Messfläche für die auf die Seitenwand 8 außenseitig aufgesetzte Temperaturabfühlvorrichtung 1. Die Seitenwand 8 dient dabei als umlaufender Schutz, z.B. zum Abhalten einer mechanischen oder chemischen Beanspruchung und/oder zum Abhalten von Störstrahlung, und als Befestigungsbereich für die Temperaturabfühlvorrichtung 1.

Der Adapter 6 ist aus einem elastischen, thermisch beständigen Grundmaterial 6a wie Silikon hergestellt, wobei in der Seitenwand 8 ein dauermagnetischer Ring 13 eingebettet ist. In dem Grundmaterial 6a ist Ruß als Füllstoff verteilt, so dass eine Oberfläche des Adapters 6 matt-schwarz erscheint. Dieses Grundmaterial (mit dem Ruß als Füllstoff) ist IR-undurchlässig. Dies ergibt eine Messfläche mit einem gut definierten und reproduzierbaren Wärme- bzw. Infrarotstrahlung(IR)-Abstrahlverhalten. Dieses IR-Abstrahlverhalten ist unabhängig von einem IR-Abstrahlverhalten der Außenseite 2 des Kochtopfs 3.

Die Temperaturabfühlvorrichtung 1 weist einen auf die Vorderseite 10 des Bodenbereichs 7 gerichteten, berührungslos arbeitenden IR-Sensor 14 auf, der z.B. einen oder mehrere Thermosäulen ("Thermopiles") aufweisen kann.

Die Temperaturabfühlvorrichtung 1 weist am ihrer Umfangsseite 15a und an ihrer dem Kochtopf 3 abgewandten Vorderseite 15b ein Gehäuse 16 auf, das z.B. aus Kunststoff bestehen kann. Eine Bodenplatte 17 deckt die dem Adapter 6 zugewandte offene Seite des Gehäuses 16 ab. Die Bodenplatte 17 weist einen dem Adapter 6 zugewandten, außenseitigen Befestigungsgegenbereich 18 auf, welcher ringförmig ist und mit seiner Innenseite auf die Seitenwand 8 des Adapters 6 aufsetzbar ist. In der Mitte der Bodenplatte 17 befindet sich eine Aussparung 18a, durch welche der IR-Sensor 14 ragt.

In einem Bereich der Bodenplatte 17 oberhalb der Seitenwand 8 des Adapters 2 befindet sich ein ringförmiger dauermagnetischer oder magnetisch anziehbarer Körper 19, z.B. ein Eisenring oder ein Dauermagnet, welcher von dem dauermagnetischen Ring 13 des Adapters 2 magnetisch angezogen wird. Dadurch wird eine einfache, aber sichere lösbare Befestigung der Temperaturabfühlvorrichtung 1 an dem Adapter 6 erreicht.

Innerhalb des von dem Gehäuse 16 und der Bodenplatte 17 begrenzten Innenraums 20 der Temperaturabfühlvorrichtung 1 befinden sich ferner ein Energiespeicher 21, z.B. eine Batterie, und ein Funksender 22. Auch mag sich in dem Innenraum 20 eine Elektronik, z.B. eine Auswerteelektronik, befinden.

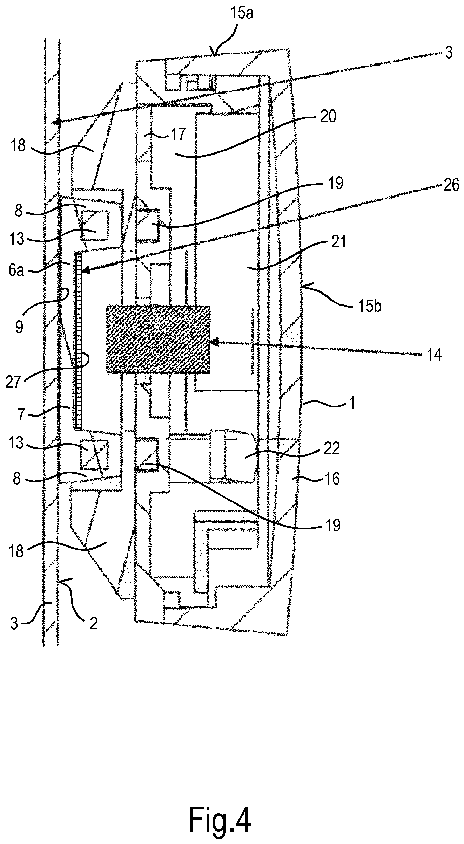

**Fig.4** zeigt als Querschnitt in Seitenansicht ein System mit dem Gargeschirr 3, einem Adapter 26 gemäß einem zweiten Ausführungsbeispiel und der daran angebrachten Temperaturabfühlvorrichtung 1. Im Gegensatz zu dem Adapter 6 weist der Adapter 26 keine Rußpartikel in dem Grund- oder Matrixmaterial auf. Vielmehr ist zur Herstellung eines gut reproduzierbaren, einem Schwarzkörper ähnlichen IR-Abstrahlverhaltens die Vorderseite des Bodenbereichs 7 nun mit einer IR-undurchlässigen Schicht 27 belegt. Die Schicht 27 weist eine bessere IR-Abstrahleigenschaft auf als die an dem Grundmaterial gebildete Rückseite 9 des Bodenbereichs 7 und mag z.B. eine matt-schwarze Farbe aufweisen.

Selbstverständlich ist die vorliegende Erfindung nicht auf die gezeigten Ausführungsbeispiele beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Temperaturabfühlvorrichtung
- 2: Außenseite des Kochtopfs
- 3: Kochtopf
- 4: Boden des Kochtopfs
- 5: Gehäuse der Temperaturabfühlvorrichtung
- 6: Adapter
- 6a: thermisch beständiges Grundmaterial
- 7: Bodenbereich des Adapters
- 8: Seitenwand des Adapters / Befestigungsbereich
- 9: Rückseite des Bodenbereichs / Kontaktbereich
- 10: Vorderseite des Bodenbereichs
- 13: dauermagnetischer Ring
- 14: IR-Sensor
- 15a: Umfangseite der Temperaturabfühlvorrichtung
- 15b: Vorderseite der Temperaturabfühlvorrichtung
- 16: Gehäuse
- 17: Bodenplatte
- 18: außenseitiger Befestigungsgegenbereich
- 18a: Aussparung
- 19: ringförmiger dauermagnetischer oder magnetisch anziehbarer Körper
- 20: Innenraum der Temperaturabfühlvorrichtung
- 21: Energiespeicher
- 22: Funksender
- 26: Adapter
- 27: IR-undurchlässige Schicht

## Patentansprüche

1. Kombination umfassend einen Adapter (6; 26) zum Befestigen einer Temperaturabfühlvorrichtung (1) an einem Gargeschirr (3) und eine Temperaturabfühlvorrichtung (1), welcher Adapter (6; 26)
- einen rückseitigen, elastisch verformbaren Kontaktbereich (9) aufweist, welcher zur Befestigung an dem Gargeschirr (3) vorgesehen ist, welcher Kontaktbereich (9) mittels einer Rückseite eines Bodenbereichs (7) des Adapters (6; 26) gebildet wird,und
- mindestens einen Befestigungsbereich (8) zur Befestigung der Temperaturabfühlvorrichtung (1) aufweist, welcher Befestigungsbereich (8) vorderseitig vorsteht, sich an den Bodenbereich (7) anschließt und dauermagnetisch oder magnetisch anziehbar ist,
**dadurch gekennzeichnet, dass**
- eine Vorderseite (10) des Bodenbereichs (7) als eine Messfläche für die Temperaturabfühlvorrichtung (1) vorgesehen ist.

2. Kombination (1, 6, 26) nach Anspruch 1, **dadurch gekennzeichnet, dass** der Bodenbereich (7) scheibenförmig ist.

3. Kombination (1, 6, 26) nach einem der vorhergehenden Ansprüche, **dadurch gekennzeichnet, dass** das Bodenstück (7) zumindest im Bereich der Messfläche IR-undurchlässig ist.

4. Kombination (1, 6, 26) nach Anspruch 3, **dadurch gekennzeichnet, dass** die Messfläche mit einer IR-undurchlässigen Schicht belegt ist oder in dem als Messfläche dienenden Bereich ein IR-undurchlässiger Körper eingebettet ist.

5. Kombination (1, 6, 26) nach einem der vorhergehenden Ansprüche, **dadurch gekennzeichnet, dass** der mindestens eine Befestigungsbereich als eine umlaufende, ringförmige Seitenwand (8) ausgebildet ist.

6. Kombination (1, 6, 26) nach einem der vorhergehenden Ansprüche, **dadurch gekennzeichnet, dass** der Adapter (6; 26) mindestens einen dauermagnetischen oder magnetisch anziehbaren Körper (13) aufweist, der in ein elastisches Grundmaterial (6a) eingebettet ist.

7. Kombination (1, 6, 26) nach Anspruch 6, **dadurch gekennzeichnet, dass** die Seitenwand (8) aus dem Grundmaterial (6a) besteht, in welches der ringförmige dauermagnetische oder magnetisch anziehbare Körper (13) eingebettet ist.

8. Kombination (1, 6, 26) nach einem der vorhergehenden Ansprüche, **dadurch gekennzeichnet, dass** der Adapter in ein Grundmaterial (6a) eingebetteten, magnetisch anziehbaren Füllstoff und IR-undurchlässiges Füllmaterial aufweist.

9. Gargeschirr (3), **dadurch gekennzeichnet, dass** das Gargeschirr (3) an seiner Außenseite (2) mindestens eine Kombination (1, 6) nach einem der vorhergehenden Ansprüche aufweist.

10. Gargeschirr (3) nach Anspruch 9, **dadurch gekennzeichnet, dass** der Adapter (6; 26) mit seinem Kontaktbereich (9) an der Außenseite (2) des Gargeschirrs (3) angeklebt ist.

11. Gargeschirr (3) nach einem der Ansprüche 9 oder 10, **dadurch gekennzeichnet, dass** die Temperaturabfühlvorrichtung (1) an dem mindestens einen Befestigungsbereich (8) des Adapters (6; 26) magnetisch befestigt ist, welche Temperaturabfühlvorrichtung (1) mindestens einen in Richtung der Vorderseite (10) des Bodenbereichs (7) gerichteten, berührungslos arbeitenden IR-Sensor (14) aufweist.

## Claims

1. Combination comprising an adapter (6; 26) for attaching a temperature sensor (1) to a cooking dish (3) and a temperature sensor (1), which adapter (6; 26)
- has a rear, elastically deformable contact region (9), which is provided for attachment to the cooking dish (3), which contact region (9) is formed by means of a rear of a base region (7) of the adapter (6; 26), and
- has at least one attachment region (8) for attaching the temperature sensor (1), which attachment region (8) protrudes at the front, connects to the base region (7) and can be attracted in a permanent magnetic or magnetic manner,
**characterised in that**
- a front side (10) of the base region (7) is provided as a measuring surface for the temperature sensor (1).

2. Combination (1, 6, 26) according to claim 1, **characterised in that** the base region (7) is embodied in disc form.

3. Combination (1, 6, 26) according to one of the preceding claims, **characterised in that** the base piece (7) is IR impermeable at least in the region of the measuring surface.

4. Combination (1, 6, 26) according to claim 3, **characterised in that** the measuring surface is populated with an IR-impermeable layer or an IR-impermeable element is embedded in the region used as a measuring surface.

5. Combination (1, 6, 26) according to one of the preceding claims, **characterised in that** the at least one attachment region is embodied as a circumferential, annular side wall (8).

6. Combination (1, 6, 26) according to one of the preceding claims, **characterised in that** the adapter (6; 26) has at least one element (13) which can be attracted in a permanent magnetic or magnetic manner and is embedded in an elastic base material (6a).

7. Combination (1, 6, 26) according to claim 6, **characterised in that** the side wall (8) consists of the base material (6a), in which the annular element (13) which can be attracted in a permanent magnetic or magnetic manner is embedded.

8. Combination (1, 6, 26) according to one of the preceding claims, **characterised in that** the adapter has magnetically attractable filling material embedded in a base material (6a) and IR-impermeable filling material.

9. Cooking dish (3), **characterised in that** on its outer side (2) the cooking dish (3) has at least one combination (1, 6) according to one of the preceding claims.

10. Cooking dish (3) according to claim 9, **characterised in that** the adapter (6; 26) is glued to its contact region (9) on the outer side (2) of the cooking dish (3).

11. Cooking dish (3) according to one of claims 9 or 10, **characterised in that** the temperature sensor (1) is magnetically attached to the at least one attachment region (8) of the adapter (6; 26), which temperature sensor (1) has at least one contactlessly operating IR sensor (14) aligned in the direction of the front side (10) of the base region (7).

## Revendications

1. Combinaison comprenant un
adaptateur (6 ; 26) pour la fixation d'un dispositif de détection de température (1) à un élément de batterie de cuisine (3) et un dispositif de détection de température (1), lequel adaptateur (6 ; 26)
- présente une zone de contact (9) arrière, déformable élastiquement, prévue pour la fixation à l'élément de batterie de cuisine (3), laquelle zone de contact (9) est constituée au moyen d'un côté arrière d'une zone de fond (7) de l'adaptateur (6 ; 26), et
- présente au moins une zone de fixation (8) pour la fixation du dispositif de détection de température (1), laquelle zone de fixation (8) fait saillie côté avant, rallie la zone de fond (7) et peut être attirée par un aimant ou un aimant permanent, **caractérisée en ce que**
- un côté avant (10) de la zone de fond (7) est prévu sous la forme d'une surface de mesure pour le dispositif de détection de température (1).

2. Combinaison (1, 6, 26) selon la revendication 1, **caractérisée en ce que** la zone de fond (7) est discoïde.

3. Combinaison (1, 6, 26) selon l'une des revendications précédentes, **caractérisée en ce que** la pièce de fond (7) est imperméable aux IR au moins dans la zone de la surface de mesure.

4. Combinaison (1, 6, 26) selon la revendication 3, **caractérisée en ce que** la surface de mesure est dotée d'une couche imperméable aux IR ou un corps imperméable aux IR est logé dans la zone faisant office de surface de mesure.

5. Combinaison (1, 6, 26) selon l'une des revendications précédentes, **caractérisée en ce que** l'au moins une zone de fixation est exécutée sous la forme d'une paroi latérale (8) annulaire périphérique.

6. Combinaison (1, 6, 26) selon l'une des revendications précédentes, **caractérisée en ce que** l'adaptateur (6 ; 26) présente au moins un corps (13) pouvant être attiré par un aimant ou un aimant permanent, logé dans un matériau de base (6a) élastique.

7. Combinaison (1, 6, 26) selon la revendication 6, **caractérisée en ce que** la paroi latérale (8) se compose du matériau de base (6a), dans lequel le corps (13) annulaire pouvant être attiré par un aimant ou un aimant permanent est logé.

8. Combinaison (1, 6, 26) selon l'une des revendications précédentes, **caractérisée en ce que** l'adaptateur présente une substance de remplissage pouvant être attirée par un aimant et un matériau de remplissage imperméable aux IR, logés dans un matériau de base (6a).

9. Élément de batterie de cuisine (3), **caractérisé en ce que** l'élément de batterie de cuisine (3) présente, sur son côté extérieur (2), au moins une combinaison (1, 6) selon l'une des revendications précédentes.

10. Élément de batterie de cuisine (3) selon la revendication 9, **caractérisé en ce que** l'adaptateur (6 ; 26) est collé par sa zone de contact (9) sur le côté extérieur (2) de l'élément de batterie de cuisine (3).

11. Élément de batterie de cuisine (3) selon l'une des revendications 9 ou 10, **caractérisé en ce que** le dispositif de détection de température (1) est fixé magnétiquement en l'au moins une zone de fixation (8) de l'adaptateur (6 ; 26), lequel dispositif de détection de température (1) présente au moins un capteur IR (14) fonctionnant sans contact, dirigé vers le côté avant (10) de la zone de fond (7).
